# Europäisches Patentamt

# European Patent Office

# Office européen des brevets

(11) Veröffentlichungsnummer: **0 225 527**
**A2**

(12) ## EUROPÄISCHE PATENTANMELDUNG

(21) Anmeldenummer: **86116169.3**

(22) Anmeldetag: **21.11.86**

(51) Int. Cl.⁴: **F 23 R 3/00, F 02 K 1/82**

(30) Priorität: **02.12.85 DE 3542532**

(43) Veröffentlichungstag der Anmeldung: **16.06.87**
**Patentblatt 87/25**

(84) Benannte Vertragsstaaten: **CH DE FR GB LI SE**

(71) Anmelder: **KRAFTWERK UNION AKTIENGESELLSCHAFT, Wiesenstrasse 35, D-4330 Mülheim (Ruhr) (DE)**

(72) Erfinder: **Maghon, Helmut, Dipl.-Math., Stockweg 61, D-4330 Mülheim/Ruhr (DE)**
Erfinder: **Schulten, Wilhelm, Dipl.-Ing., Sängergasse 11, D-4330 Mülheim/Ruhr (DE)**

(74) Vertreter: **Mehl, Ernst, Dipl.-Ing. et al, Postfach 22 01 76, D-8000 München 22 (DE)**

(54) **Kühlfluidkanäle aufweisende Wand, insbesondere für Gasturbinenanlagen, und Verfahren zu ihrer Herstellung.**

(57) Eine erfindungsgemäße Heißgaskanalwand (1) ist aus einzelnen, im Grundriß z.B. polygonförmigen, insbesondere trapezförmigen, Wandelementen aufgebaut, vorzugsweise zusammengeschweißt. Jedes der Wandelemente ist ein aus hochwarmfestem Stahl gefertigter Plattenkörper, welcher interne, über seine Grundfläche verteilte Kühlkanäle (2) aufweist. Die internen Kühlkanäle jedes der Wandelemente kommunizieren an ihrem einen Ende (2.1) mit einem Kühlfluidraum (KR) und an ihrem anderen Ende (2.2) mit einem Heißraum (HR). Form, Anordnung, Verlauf und Abstand der einzelnen Kühlkanäle (2) und ihre Enden (2.1, 2.2) sind in großem Maße variabel und an die vorgesehene Anwendung anpaßbar. Das aus den Auslaßöffnungen (2.2) austretende Kühlfluid bildet zusätzlich einen Kühlfilm über der Wand (1).

KRAFTWERK UNION AKTIENGESELLSCHAFT    Unser Zeichen

Mülheim a. d. Ruhr          1          VPA 85 P 6111 E

Kühlfluidkanäle aufweisende Wand, insbesondere für Gasturbinenanlagen, und Verfahren zu ihrer Herstellung

Die Erfindung bezieht sich auf eine von Kühlfluidkanälen durchdrungene Wand, insbesondere für Gasturbinenanlagen, die zwischen einem Heißraum und einem Kühlfluidraum angeordnet ist, gemäß dem Oberbegriff des Anspruchs 1, sowie auf Verfahren zu ihrer Herstellung.

Solche Wände werden vor allem für Heißgaskanäle an Gasturbinen-Innengehäusen benötigt oder als Begrenzungswände für einen Heißgaskanal, welcher vom Brennkammer-Abströmraum in den Gasturbinen-Zuströmraum mündet. Auch die Verwendung z. B. als Brennkammer-Innenauskleidung ist möglich. Derartige Wände unterliegen beim Anfahren, beim Abfahren und während des Betriebes einer Gasturbinenanlage einer hohen Temperatur- und Temperaturwechsel-Beanspruchung. So kann im Inneren eines solchen Heißgaskanals z. B. eine Durchschnittstemperatur von 1400° C herrschen, während im Kühlfluidraum Temperaturen von z. B. 400 bis 450° C vorkommen. Im allgemeinen ist es dabei erwünscht, daß die Oberflächentemperatur der Wand trotz der hohen Innentemperatur im Heißraum nicht wesentlich über 850° C liegt.

Durch die DE-PS 1 173 734 ist es bekannt, Heißgaskanalwände mittels profilierter Steine auszufüttern, die einen Hitzeschild bilden. Kühlfluidkanäle ergeben sich dabei durch die Spalte zwischen den Brennkammersteinen und durch Durchbrüche in der die Steine tragenden Brennkammerwand.

Khf 2 F1/21.08.1986

Auch ist es allgemein bekannt, z. B. aus der DE-OS 25 43 761, eine Brennkammerwand aus mehreren schuppenförmigen Elementen aufzubauen, zwischen denen Luft zur Kühlung in den Brennraum fließt.

Gegenüber diesen zusätzlichen Auskleidungen einer Struktur mit dem Hitzeschutz dienenden, für Kühlfluid durchlässigen Platten o. dgl. geht die vorliegende Erfindung von einer anderen Bauform aus. Die erfindungsgemäße Wand dient als tragende Struktur mit einem integrierten Hitzeschild. Der Erfindung liegt die Aufgabe zugrunde, eine dieses Bauprinzip realisierende Wand zu schaffen, welche aus weitgehend gleichartigen Wandelementen zusammengesetzt werden kann, wobei sich durch das Zusammensetzen die Tragfunktion und die Kühlfunktion der Wand ergeben.

Erfindungsgemäß wird die gestellte Aufgabe bei einer gattungsgemäßen Wand durch die im Kennzeichen des Anspruchs 1 angegebenen Merkmale gelöst. Vorteilhafte Ausgestaltungen sind in den Ansprüchen 2 bis 5 angegeben.

Entsprechende Wandelemente zum Aufbau einer erfindungsgemäßen Wand mit verschiedenen vorteilhaften Ausgestaltungen sind ferner in den Ansprüchen 6 bis 15 behandelt. Verfahren zur Herstellung solcher Wandelemente werden schließlich in den Ansprüchen 16 bis 18 beschrieben.

Die mit der Erfindung erzielbaren Vorteile sind vor allem darin zu sehen, daß jedes Wandelement praktisch auf seiner gesamten Fläche von Kühlfluidkanälen durchzogen ist, und daß das Kühlfluid, bevor es aus dem Wandelement in den Heißgasraum übertritt, in der einen Ausdehnungsrichtung des Wandelementes dieses auf seiner gesamten Länge

0225527

durchströmt haben muß. Bevorzugt sind die inneren Kühlkanäle zueinander parallel geschaltet, wodurch die Kühlung
besonders intensiv ist. Auf diese Weise lassen sich auch
sehr hohe Innentemperaturen mit rein metallischen Strukturen beherrschen, ohne daß es einer zusätzlichen, beispielsweise keramischen Auskleidung bedarf. Dadurch,
daß kein geschlossener Kühlkreislauf verwendet wird,
sondern das Kühlmittel in den Heißraum strömt, läßt sich
zusätzlich außer der durch die Kühlkanäle bewirkten
Kühlung noch eine weitere Kühlung durch die Ausbildung
eines Kühlfluidfilmes auf der heißen Seite der Wand erreichen. Wie anhand der Zeichnung noch näher erläutert
wird, gibt es viele verschiedene Möglichkeiten zur Ausgestaltung der Kühlkanäle und zum Erreichen eines Kühlfilms.

Um auch kompliziert geformte Strukturen als erfindungsgemäße Wände ausführen zu können, ist es nötig, diese
aus geeignet geformten Wandelementen zusammenzufügen.
Durch Verwendung von Wandelementen mit unabhängigen
Kühlkanalsystemen ist es möglich, solche Elemente untereinander zu einer Struktur zusammenzuschweißen oder anderweitig zusammenzufügen, ohne daß auf Verbindungsstellen
von Kühlkanälen geachtet werden muß.

Zur Auskleidung einer beliebigen Struktur können polygonförmige, vorzugsweise annähernd rechteckige Wandelemente
verwendet werden. Auch Elemente in Form eines Parallelogrammes oder eines Trapezes eignen sich zum Aufbau einer
komplizierten Struktur, wobei die einzelnen Elemente
untereinander nicht notwendigerweise kongruent sein müssen. Durch Verwendung von U-förmigen oder mäanderförmigen Kühlkanälen lassen sich jedoch auch fast beliebige andere Formen von Wandelementen mit Kühlkanälen annähernd gleicher Wirksamkeit erstellen.

Ein solches Wandelement ist durch Veränderung verschiedener Parameter sehr flexibel an gewünschte Einsatzbedingungen anpaßbar. So können Anzahl, Form, Abstand und Querschnitt der Kühlkanäle variiert werden. Weiterhin ist eine optimale Anpassung der Aus- und Einlässe der Kühlkanäle zur Ausbildung eines Kühlfluidfilms möglich. Weitere Varianten werden anhand der Zeichnung näher erläutert. Schließlich ist es auch von entscheidender Bedeutung, in welchem Abstand ein Kühlkanal von der heißen Oberfläche des Wandelementes verläuft. Dieser Abstand kann beispielsweise über die ganze Länge des Kühlkanales gleich sein, er kann jedoch auch beispielsweise abnehmen. Ferner kann auch der mittlere Abstand der Kühlkanäle zur heißen Oberfläche des Wandelementes variiert, insbesondere kleiner als der mittlere Abstand der Kühlkanäle zur kalten Seite des Wandelementes gewählt werden. Auf diese Weise läßt sich der Verlauf der Temperaturgradienten in einem Wandelement in weitem Umfang den gewünschten Bedingungen anpassen. Besonders bevorzugt wird dabei ein Verlauf des Temperaturgradienten, der einen möglichst großen Temperaturabfall in einer möglichst kleinen Oberflächenschicht ermöglicht, um thermische Spannungen in den Wandelementen kleinzuhalten.

Das Konzept der Wandelemente läßt es in Verbindung mit verschiedenen Herstellungsverfahren zu, dieses aus zwei Schichten aufzubauen, zwischen bzw. in denen die Kühlkanäle verlaufen. Eine solche Schichtung ist nicht nur aus fertigungstechnischen Gründen vorteilhaft, sondern ermöglicht es auch, unterschiedliche Materialien für die dem Heißraum zugekehrte Schicht und die dem Kühlfluidraum zugekehrte Schicht zu verwenden. Insbesondere können die Materialien so ausgewählt werden, daß ihre Ausdehnungskoeffizienten die unterschiedlichen Aufwärmspannen der beiden Schichten in etwa kompensieren und so die Wärmespannungen in den Wandelementen gering halten.

Neben üblichen Verfahren, bei denen solche Wandelemente mit Kanälen gegossen werden, gibt es weitere in den Ansprüchen 16 bis 18 beschriebene Verfahren zur Herstellung. So können die Kühlkanäle beispielsweise nachträglich durch Tiefbohren eingebracht werden. Auch der Aufbau aus zwei Schichten, die einzeln gegossen oder anderweitig hergestellt sind, ist möglich, wobei die beiden Schichten miteinander durch Löten, Diffusionsschweißen oder Sprengplattieren verbunden werden. Dabei ist es gleichgültig, ob die Kühlkanäle vor dem Verbinden aus einer oder aus beiden Schichten ausgespart bzw. herausgearbeitet sind.

Auch die Abdeckung von in einer Schicht eingearbeiteten Kühlkanälen mittels eines Beschichtungsverfahrens, beispielsweise Auftragsschweißen, Aufwalzen von Schichten o. dgl. ist möglich.

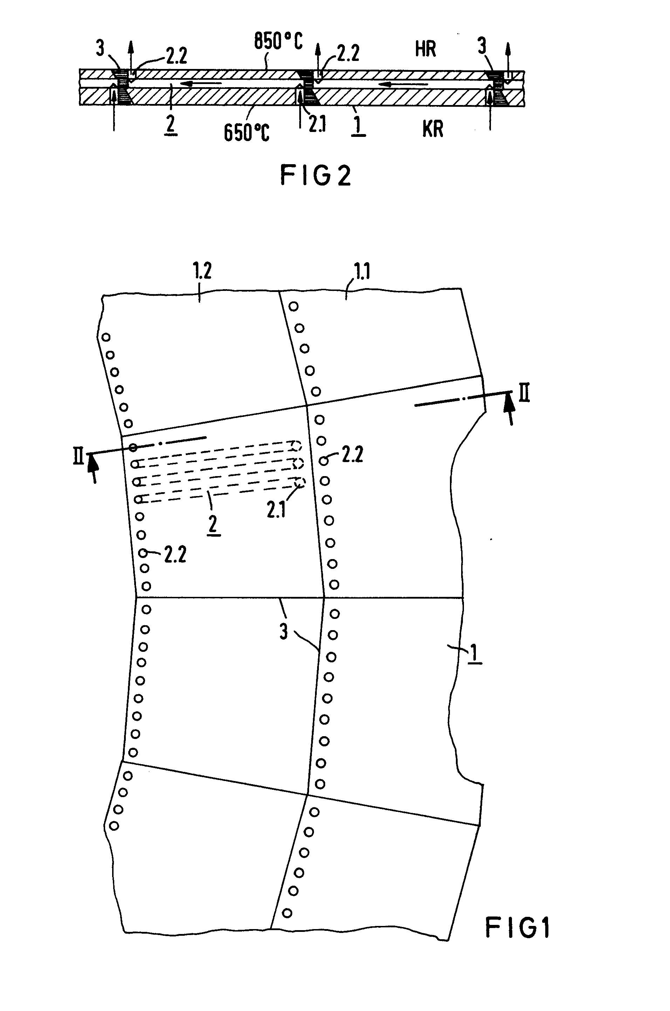

Verschiedene Ausführungsbeispiele der Erfindung, insbesondere bezüglich des Verlaufs der Kühlkanäle, werden schematisch anhand der Zeichnung näher erläutert.
Es zeigen Fig. 1 den Aufbau einer erfindungsgemäßen Wand aus einzelnen Wandelementen,

Fig. 2 einen Querschnitt durch Fig. 1 entlang der Linie II-II,

0225527

Fig. 3 bis 8 unterschiedliche Anordnungen von Kühlkanälen in verschieden geformten Wandelementen,

Fig. 9 bis 11 unterschiedliche Ausführungsformen der Ein- bzw. Auslässe von Kühlkanälen,

Fig. 12 bis 15 unterschiedliche Möglichkeiten der Ausbildung von Kühlfluidfilmen durch verschiedene Anordnung der Wandelemente und Auslaßöffnungen zueinander und

Fig. 16 einen Ausschnitt aus einem erfindungsgemäßen Wandelement mit einem Netz aus inneren Kühlkanälen.

Figur 1 zeigt eine erfindungsgemäße Wand 1, die aus mehreren Wandelementen 1.1, 1.2 zusammengesetzt ist. Dabei sind die einzelnen Wandelemente vorzugsweise durch Schweißnähte 3 verbunden. Kühlkanäle 2 durchziehen die Wandelemente im Inneren, wobei jeder Kühlkanal 2 einen Einlaß 2.1 auf der Kühlfluidseite und einen Auslaß 2.2 auf der Heißseite aufweist.

Figur 2 zeigt einen Schnitt durch Figur 1 entlang der Linie II-II zur Veranschaulichung des inneren Aufbaus der Wand 1. Ein Kühlfluidraum KR wird durch die Wand 1 von einem Heißraum HR getrennt. Beispielhaft sind mögliche Oberflächentemperaturen auf den beiden Seiten der Wand mit 850 °C bzw. 650 °C angegeben. Die durch die Wand getrennten Medien können jedoch auch sehr viel größere Temperaturunterschiede aufweisen, wobei durch einen Kühlfluidfilm auf der dem Heißraum HR zugewandten Seite der Wand 1 die Oberflächentemperatur wesentlich niedriger als die in dem Heißraum HR herrschende Temperatur sein kann. Der Verlauf der Kühlkanäle 2 ist in Figur 2 schematisch angedeutet. Jeder Kühlkanal 2 besitzt mindestens einen Einlaß 2.1 vom Kühlfluidraum KR her und mindestens einen Auslaß 2.2 zum Heißraum HR hin. Die einzelnen Wandelemente sind durch Schweißverbindungen 3 miteinander verbunden.

Hinzuweisen sei noch darauf, daß die einzelnen Wandelemente nicht grundsätzlich ebene Plattenkörper sein müssen. Sie können, je nach vorgesehenem Anwendungsfall z. B. auch Rotationskörpersegmente mit unterschiedlichen Krümmungen sein. In vielen Fällen wird es jedoch ausreichen, eine bestimmte gekrümmte Wandform durch mosaikartigen Zusammenbau von ebenen oder gleichartig gekrümmten Plattenkörpern herzustellen.

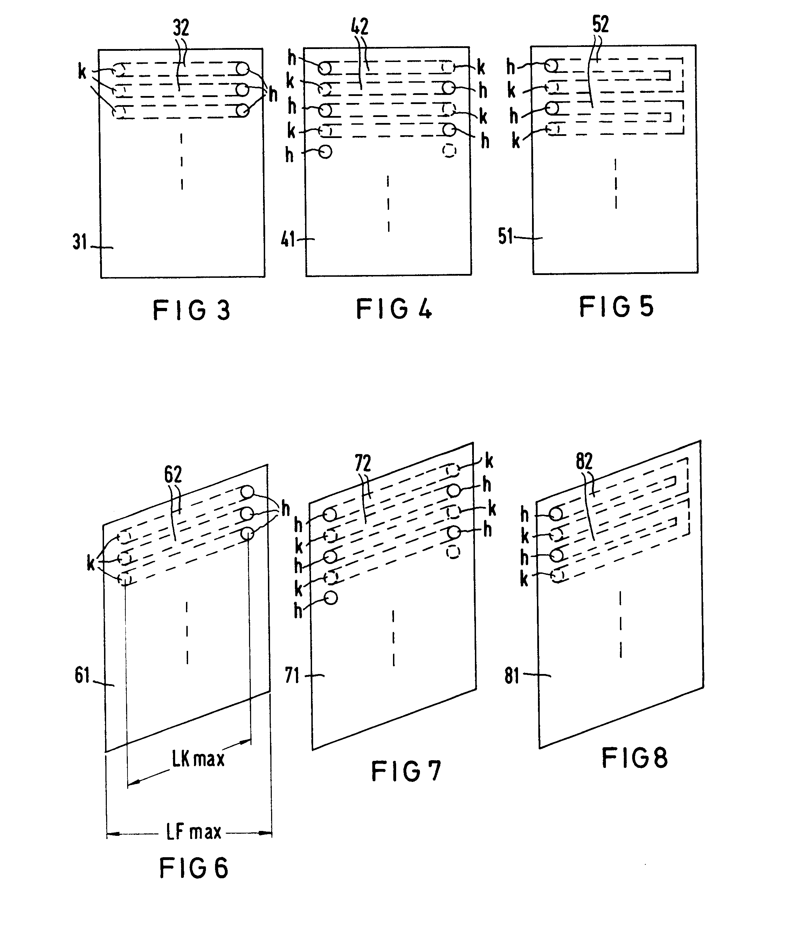

Die Figuren 3 bis 8 zeigen unterschiedliche Kühlkanalanordnungen in unterschiedlich geformten Plattenkörpern, wobei zur Veranschaulichung des Prinzips jeweils Rechtecke oder Parallelogramme dargestellt sind, was jedoch die Formenvielfalt möglicher Plattenkörper nicht einschränken soll. Prinzipiell ist es möglich, wie in Figur 3 dargestellt, in einem Plattenkörper 31 Kühlkanäle 32 anzuordnen, welche alle an einem Ende des Plattenkörpers Einlässe k vom Kühlfluidraum her und an der gegenüberliegenden Seite Auslässe h zum Heißraum hin aufweisen. Solche Kanäle sind parallel von Kühlfluid durchströmt. Alternativ ist es jedoch auch möglich, Einlässe h und Auslässe k abwechselnd anzuordnen, so daß etwa parallel verlaufende Kühlkanäle 42 in einem Plattenkörper 41 entstehen, die jedoch gegensinnig von Kühlfluid durchströmbar sind. Ferner ist es, wie in Figur 5 dargestellt, auch möglich, einen Plattenkörper 51 mit U-förmigen oder meander-förmigen Kühlkanälen 52 zu versehen, deren Einlässe k auf einer Seite neben den Auslässen h liegen. Auch können die Ein- bzw. Auslässe von U-förmigen Kanälen wechselweise an unterschiedlichen Enden der Plattenkörper angeordnet werden.

0225527

Gemäß den Figuren 6 bis 8 ist es auch möglich, Wandelemente 62, 72, 82 mit schräg zur vorgesehenen Strömungsrichtung eines durch das Wandelement eingeschlossenen Heißfluidstromes verlaufenden Kühlkanälen 62, 72, 82 zu versehen. Grundsätzlich muß der Verlauf der Kühlkanäle nicht parallel zur Strömungsrichtung eines von den Wänden eingeschlossenen heißen Fluides sein. Abhängig von der möglichen Aufwärmspanne des Kühlfluides, seiner Wärmekapazität, seiner Strömungsgeschwindigkeit in den Kühlkanälen und weiteren Parametern gibt es eine maximale zur Kühlung geeignete Kühlkanallänge LKmax, welche nicht mit der maximalen Länge LFmax des Strömungsweges eines heißen Fluides über ein Wandelement übereinzustimmen braucht.

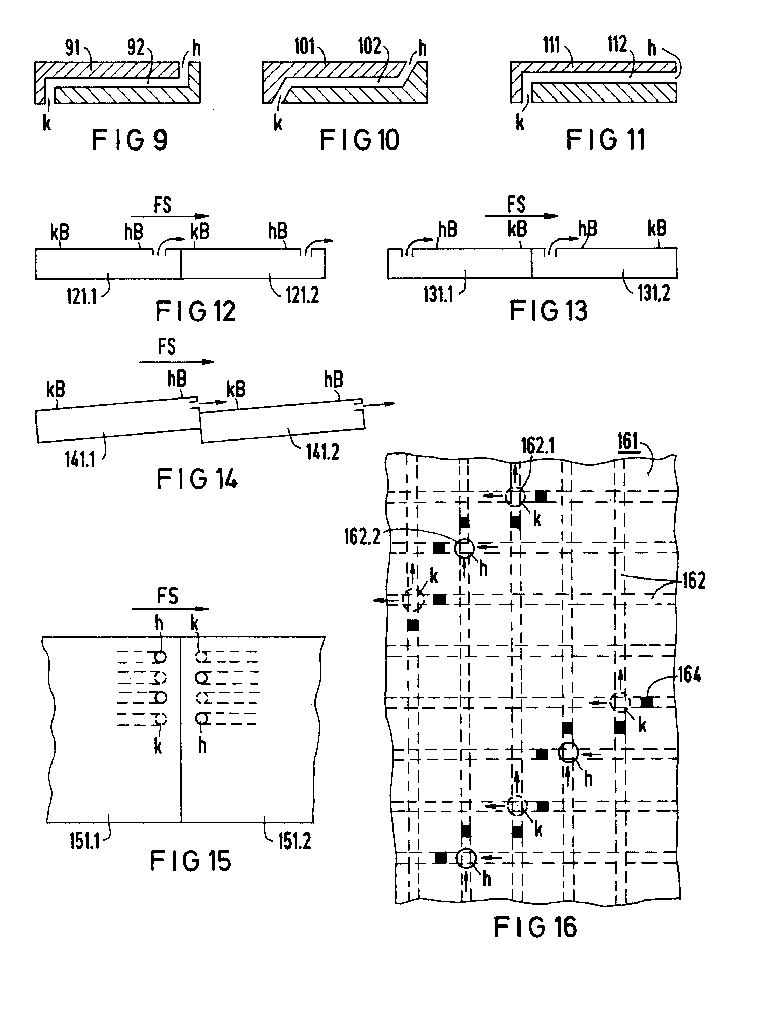

Die Figuren 9, 10 und 11 zeigen unterschiedliche Formen der Einlässe k und Auslässe h von Kühlkanälen 92, 102, 112 in schematisch im Längsschnitt dargestellten Wandelementen 91, 101 bzw. 111. Figur 9 zeigt eine der Figur 2 entsprechende Konfiguration. In Figur 10 sind Einlaß k und Auslaß h schräg durch die Unter- bzw. Oberseite des Wandelementes 101 geführt. Figur 11 zeigt ein Wandelement 111, welches sich für einen schuppenartigen Aufbau einer Wandstruktur eignet. Während der Einlaß k wie in den Figuren 9 oder 10 gestaltet sein kann, befindet sich der Auslaß h seitlich an dem Plattenelement.

Die Figuren 12 bis 15 veranschaulichen unterschiedliche Konfigurationen, die sich beim Zusammenbau erfindungsgemäßer Wandelemente bezüglich der Ausbildung und Verteilung der Kühlung durch Kühlkanäle und Kühlfilm ergeben können. In Figur 12 bewirkt das aus einem Wandelement 121.1 austretende Kühlfluid eine Kühlung des in Strömungsrichtung FS benachbarten Wandelementes 121.2. Die innere Kühlung der einzelnen Wandelemente 121.1 und 121.2 führt zunächst zu einem stromaufliegenden kühleren Bereich kB und einem stromabliegenden heißeren Bereich hB. Das aus einem Wandelement 121.1 austretende Kühlfluid strömt zunächst über den kühleren Bereich kB und dann über den heißeren Bereich hB des benachbarten Wandelementes 121.2. Dies führt nicht unbedingt zu einer optimalen gleichmäßigen Kühlung der Wandstruktur.

In Figur 13 hingegen bildet das aus den Wandelementen 131.1 bzw. 131.2 ausströmende Kühlfluid zunächst einen Kühlfilm über dem heißen Bereich hB und dann über dem kalten Bereich kB des jeweiligen Wandelementes 131.1 bzw. 131.2 selbst. Die gegenläufige Kühlwirkung von innerer Kühlung und Kühlfilm vergleichmäßigt hier die gesamte Kühlung der Struktur. Figur 14 zeigt anhand von zwei Wandelementen 141.1, 141.2 schematisch den schuppenartigen Aufbau einer erfindungsgemäßen Wand durch gegeneinander versetzte Wandelemente. Hier strömt das Kühlfluid aus seitlichen Auslaßöffnungen aus und bildet einen Film auf dem in Strömungsrichtung FS benachbarten Wandelement 141.2. Hier überströmt das austretende Kühlfluid wiederum zunächst einen kalten Bereich kB und anschließend einen heißen Bereich hB, wodurch sich insgesamt eine etwas ungleichmäßige Kühlung ergeben kann, was jedoch nicht unbedingt mit großen Nachteilen verbunden ist.

Figur 15 zeigt in einer Ansicht von der Seite des Heißraumes schematisch das Zusammenwirken zweier Wandelemente 151.1, 151.2 in bezug auf den Kühlfilm. Diese Anordnung läßt sich beispielsweise mit den Wandelementen der Figuren 4, 5, 7 oder 8 verwirklichen. Bei dieser Konstellation treten bezüglich der Ausbildung des Kühlfilmes abwechselnd die Konstellationen der Figuren 12 bzw. 13 auf. Insgesamt ergibt sich durch die gegenläufige Strömung in den Kühlkanälen selbst und die genannte Kühlfilmausbildung eine
sehr gleichmäßige Kühlung der Struktur.

Figur 16 zeigt einen Ausschnitt aus einem Wandelement 161
mit netzförmig verlaufenden, sich kreuzenden Kühlkanälen
162. Eine solche netzförmige Anordnung mit untereinander
kommunizierenden Kühlkanälen 162 und mehreren Einlässen k
und Auslässen h bietet einerseits eine gleichmäßige Kühlung
und ist andererseits durch eventuell auftretende Blockaden
in einzelnen Kühlkanälen in ihrer Funktion nur unwesentlich
beeinträchtigt. Durch gezielt angebrachte Absperrungen 164
können dabei bestimmte Mindestweglängen für das Kühlfluid
sichergestellt werden, d. h. die Absperrungen 164 werden
im allgemeinen so angebracht, daß sehr kurze Verbindungswege zwischen Einlässen k bzw. 162.1 und Auslässen h gesperrt sind. Durch alternierende Anordnung von Einlässen k
und Auslässen h kann im übrigen eine sehr gleichmäßige und
durch Störungen nur wenig beeinflußbare Kühlfluidströmung,
wie mit kleinen Pfeilen angedeutet, bewirkt werden.

Die vorliegende Erfindung eignet sich besonders für Anwendungen bei Gasturbinen-Anlagen, bei denen sehr hohe Temperaturen in Brennräumen bzw. Heißgaskanälen beherrscht
werden müssen.

Patentansprüche

1. Von Kühlfluidkanälen (2; 32; 42; 52; 62; 72; 82; 92; 102; 112; 162) durchdrungene Wand (1; 31; 41; 51; 61; 71; 81; 91; 101; 111; 121; 131; 141; 151; 161), insb. für Gasturbinenanlagen, die zwischen einem Heißraum (HR) und einem Kühlfluidraum (KR) angeordnet ist, d a d u r c h g e k e n n z e i c h n e t, daß die Wand (1; 31; 41; 51; 61; 71; 81; 91; 101; 111; 121; 131; 141; 151; 161) aus einzelnen Wandelementen (1.1, 1.2; 121.1, 121.2; 131.1, 131.2; 141.1, 141.2; 151.1, 151.2) zusammengefügt ist, wobei jedes der Wandelemente ein aus hochwarmfestem Material gefertigter Plattenkörper ist, welcher innere, über seine Grundfläche verteilte Kühlkanäle (2; 32; 42; 52; 62; 72; 82; 92; 102; 112; 162) aufweist, die an dem einen Ende (2.1; 162.1; k) mit dem Kühlfluidraum (KR) und an dem anderen Ende (2.2; 162.2; h) mit dem Heißraum (HR) kommunizieren.

2. Wand nach Anspruch 1, d a d u r c h g e k e n n - z e i c h n e t, daß jedes Wandelement (1.1, 1.2; 121.1, 121.2; 131.1, 131.2; 141.1, 141.2; 151.1. 151.2) ein von dem der anderen Wandelemente unabhängiges Kühlkanalsystem aufweist.

3. Wand nach Anspruch 1 oder 2, d a d u r c h g e - k e n n z e i c h n e t, daß das mit dem Heißraum (HR) kommunizierende Ende (2.2; 162.2; h) jedes Kühlfluidkanals (2; 32; 42; 52; 62; 72; 82; 92; 101; 112; 162) eines Wandelementes (1.1, 1.2; 121.1, 121.2; 131.1, 131.2; 141.1, 141.2; 151.1, 151.2) so gestaltet ist, daß dort austretendes Kühlfluid auf der Oberfläche dieses Wandelementes und/oder benachbarter Wandelemente einen Kühlfluidfilm bilden kann.

4. Wand nach Anspruch 1, 2, oder 3, d a d u r c h g e k e n n z e i c h n e t, daß die Wandelemente (1.1, 1.2; 121.1, 121.2; 131.1, 131.2; 141.1, 141.2; 151.1, 151.2) zusammengesetzt eine ebene Oberfläche zum Heißraum (HR) hin bilden.

5. Wand nach Anspruch 1, 2 oder 3, d a d u r c h g e k e n n z e i c h n e t, daß die Wandelemente (141.1, 141.2) eine schuppenartige Oberfläche bilden, d. h. überlappen oder zumindest gegeneinander in bezug auf die Oberfläche zum Heißraum (HR) versetzt sind, wobei die mit dem Heißraum (HR) kommunizierenden Enden der Kühlkanäle vorzugsweise in den überstehenden Seitenbereichen der Wandelemente (141.1, 141.2) liegen.

6. Wandelement zum Aufbau einer Wand nach einem der vorhergehenden Ansprüche, d a d u r c h g e k e n n z e i c h n e t, daß das Wandelement (1; 31; 41; 51; 61; 71; 81; 91; 101; 111; 121; 131; 141; 151; 161) polygonförmig, vorzugsweise annähernd rechteckig ist.

7. Wandelement nach Anspruch 6, d a d u r c h g e k e n n z e i c h n e t, daß das Wandelement (31; 61) etwa parallel verlaufende und parallel durchströmbare Kühlkanäle (32; 62) aufweist, die alle an einem Ende des Wandelementes (31; 61) Eintrittsöffnungen (k) vom Kühlfluidraum (KR) und an dem anderen Ende Austrittsöffnungen (h) zum Heißraum (HR) aufweisen.

8. Wandelement nach Anspruch 6, d a d u r c h g e k e n n z e i c h n e t, daß das Wandelement (41; 71) etwa parallel verlaufende,aber gegensinnig durchströmbare Kühlkanäle (42, 72) aufweist, die abwechselnd Eintrittsöffnungen (k) und Austrittsöffnungen (h) an beiden Enden aufweist.

9. Wandelement nach Anspruch 6, d a d u r c h   g e -
k e n n z e i c h n e t, daß das Wandelement (51; 81)
U-förmige oder mäanderförmige Kühlkanäle (52; 82) aufweist, die parallel oder gegensinnig durchströmbar sind.

10. Wandelement nach Anspruch 6, 7, 8 oder 9, d a -
d u r c h   g e k e n n z e i c h n e t, daß das Wandelement (61; 71; 81) annähernd parallelogrammförmig ist
und schräg zur vorgesehenen Strömungsrichtung eines durch
das Wandelement eingeschlossenen Heißfluidstromes verlaufende Kühlkanäle (62; 72; 82) aufweist.

11. Wandelement nach einem der Ansprüche 6 bis 10, d a -
d u r c h   g e k e n n z e i c h n e t, daß das Wandelement (161) von einem Netz von sich kreuzenden, miteinander kommunizierenden Kühlkanälen (162) durchzogen
ist, wobei dieses Netz Einlaßöffnungen (162.1, k) zum
Kühlfluidraum (KR) und Auslaßöffnungen (162.2, h) zum
Heißraum (HR) aufweist, vorzugsweise an Kreuzungsstellen
der Kühlkanäle.

12. Wandelement nach Anspruch 11, d a d u r c h   g e -
k e n n z e i c h n e t, daß in den Kühlkanälen (162)
Absperrungen (164) derart angeordnet sind, daß das Kühlfluid vorgegebene Mindestweglängen zwischen Einlaß (k)
und Auslaß (h) durchlaufen muß.

13. Wandelement nach einem der Ansprüche 6 bis 12,
d a d u r c h   g e k e n n z e i c h n e t, daß das
Wandelement  aus zwei Schichten aufgebaut ist, zwischen
bzw.in denen die Kühlkanäle verlaufen.

14. Wandelement nach Anspruch 13, d a d u r c h   g e -
k e n n z e i c h n e t, daß die dem Heißraum (HR) zugekehrte Schicht des Wandelementes und die dem Kühlfluid-

0225527

raum (KR) zugekehrte Schicht aus unterschiedlichen Materialien bestehen, deren Ausdehnungskoeffizienten zueinander im umgekehrten Verhältnis zu den vorgesehenen Temperaturgradienten in den Schichten stehen.

15. Wandelement nach einem der Ansprüche 6 bis 14, d a d u r c h   g e k e n n z e i c h n e t, daß die mittleren Abstände der Kühlkanäle (2; 32; 42; 52; 62; 72; 82; 92; 101; 112; 162) vom Heißraum (HR) geringer als die vom Kühlfluidraum (KR) sind, z. B. im Verhältnis zwischen 1:2 bis 1:5, vorzugsweise 1:3.

16. Verfahren zur Herstellung eines Wandelementes gemäß einem der Ansprüche 6 bis 15, d a d u r c h   g e - k e n n z e i c h n e t, daß die Kühlkanäle (2; 32; 42; 52; 62; 72; 82; 92; 101; 112; 162) durch Tiefbohren hergestellt werden.

17. Verfahren zur Herstellung eines Wandelementes gemäß einem der Ansprüche 13, 14 oder 15, d a d u r c h   g e - k e n n z e i c h n e t, daß die Schichten miteinander an den Stegen zwischen den Kühlkanälen durch Löten, Diffusionsschweißen oder Sprengplattieren verbunden sind.

18. Verfahren zur Herstellung eines Wandelementes gemäß einem der Ansprüche 13, 14 oder 15, d a d u r c h   g e - k e n n z e i c h n e t, daß die dem Heißraum (HR) zugekehrte Seite durch Beschichtungsverfahren aufgebracht ist.

**FIG 2**

**FIG 1**

FIG 3

FIG 4

FIG 5

FIG 6

LK max

LF max

FIG 7

FIG 8

0225527

F I G 9

F I G 10

F I G 11

F I G 12

F I G 13

F I G 14

F I G 15

F I G 16